# EUROPEAN PATENT SPECIFICATION

(11) **EP 3 685 581 B1**
(45) Date of publication and mention of the grant of the patent: **07.12.2022**
(21) Application number: 18727025.1
(22) Date of filing: 01.06.2018
(51) Int. Cl.: H04N 19/463

(54) **DEVICES AND METHODS FOR IMAGE AND VIDEO CODING**
VORRICHTUNGEN UND VERFAHREN FÜR DIE BILD- UND VIDEOKODIERUNG
DISPOSITIFS ET PROCÉDÉS DE CODAGE D'IMAGES ET DE VIDÉO

(30) Priority: 09.10.2017 WO PCT/EP2017/075707
(43) Date of publication of application: 29.07.2020
(73) Proprietor: Huawei Technologies Co., Ltd., Longgang District Shenzhen, Guangdong 518129 (CN)
(72) Inventor: KOTRA, Anand, Meher, 80992 München (DE); ZHAO, Zhijie, 80992 München (DE); ESENLIK, Semih, 80992 München (DE); GAO, Han, 80992 München (DE)
(74) Representative: Epping - Hermann - Fischer
(86) International application number: PCT/EP2018/064526
(87) International publication number: WO 2019/072426

(56) References cited:
- WO-A1-2016/204478
- HAN Y ET AL: "Improvements for Intra Prediction Mode Coding", 7. JVET MEETING; 13-7-2017 - 21-7-2017; TORINO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-G0060, 5 July 2017 (2017-07-05), XP030150843,
- SEREGIN V ET AL: "Block shape dependent intra mode coding", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-D0114-v3, 15 October 2016 (2016-10-15), XP030150362,

## Description

### TECHNICAL FIELD

The invention relates to the field of image or video coding. More specifically, the invention relates to an apparatus and a method for intra prediction of a picture block as well as an encoding apparatus and a decoding apparatus comprising such an intra prediction apparatus.

### BACKGROUND

Digital video communication and storage applications are implemented by a wide range of digital devices, e.g., digital cameras, cellular radio telephones, laptops, broadcasting systems, video teleconferencing systems, etc. One of the most important and challenging tasks of these applications is video compression. The task of video compression is complex and is constrained by two contradicting parameters: compression efficiency and computational complexity. Video coding standards, such as ITU-T H.264/AVC or ITU-T H.265/HEVC, provide a good tradeoff between these parameters. For that reason support of video coding standards is a mandatory requirement for almost any video compression application.

The state-of-the-art video coding standards are based on partitioning of a source picture into picture blocks. Processing of these blocks depend on their size, spatial position and a coding mode specified by an encoder. Coding modes can be classified into two groups according to the type of prediction: intra- and inter-prediction modes. Intra-prediction modes use pixels of the same picture (also referred to as frame or image) to generate reference samples to calculate the prediction values for the pixels of the block being reconstructed. Intra-prediction is also referred to as spatial prediction. Inter-prediction modes are designed for temporal prediction and uses reference samples of previous or next pictures to predict pixels of the block of the current picture. After a prediction stage, transform coding is performed for a prediction error that is the difference between an original signal and its prediction. Then, the transform coefficients and side information are encoded using an entropy coder (e.g., CABAC for AVC/H.264 and HEVC/H.265). The recently adopted ITU-T H.265/HEVC standard (ISO/IEC 23008-2:2013, "Information technology - High efficiency coding and media delivery in heterogeneous environments - Part 2: High efficiency video coding", November 2013) declares a set of state-of-the-art video coding tools that provide a reasonable tradeoff between coding efficiency and computational complexity. An overview on the ITU-T H.265/HEVC standard has been given by Gary J. Sullivan, "Overview of the High Efficiency Video Coding (HEVC) Standard", in IEEE Transactions on Circuits and Systems for Video Technology, Vol. 22, No. 12, December 2012.

Similarly to the ITU-T H.264/AVC video coding standard, the HEVC/H.265 video coding standard provides for a division of the source picture into picture blocks in the form of so-called coding units (CUs). The term "picture block" in this disclosure is used as a synonym for coding unit or coding block. Each of the CUs can be further split into either smaller CUs or prediction units (PUs). A PU can be intra- or inter-predicted according to the type of processing applied for the pixels of PU. In case of inter-prediction, a PU represents an area of pixels that is processed by motion compensation using a motion vector specified for a PU. For intra prediction, the adjacent pixels of neighbor blocks are used as reference samples to predict a current block. A PU specifies a prediction mode that is selected from the set of intra-prediction modes for all the transform units (TUs) contained in this PU. A TU can have different sizes (e.g., 4x4, 8x8, 16x16 and 32x32 pixels) and can be processed in different ways. For a TU, transform coding is performed, i.e. the prediction error is transformed with a discrete cosine transform or a discrete sine transform (in the HEVC/H.265 standard, it is applied to intra-coded blocks) and quantized. Hence, reconstructed pixels contain quantization noise (it can become apparent, for examples, as blockiness between units, ringing artifacts along with sharp edges, etc.) that in-loop filters such as Deblocking Filter (DBF), Sample Adaptive Offset (SAO) and Adaptive Loop Filter (ALF) try to suppress.

In the H.264/AVC standard, four intra-prediction modes are available for 16x16 blocks for a luma color component. According to the HEVC/H.265 standard, 35 intra prediction modes are available and include a planar mode (the intra-prediction mode index is 0), a DC mode (the intra-prediction mode index is 1), and 33 directional or angular modes (the intra-prediction mode index ranges from 2 to 34).

As of version 1.0 of the JEM software, the set of directional intra-prediction modes has been extended to 65 modes (almost doubled) by decreasing the step angle between the neighboring directional intra-prediction modes by a factor of 2. This increase to 67 intra-prediction modes in total would result in a significant signaling overhead and, thus, reduced coding efficiency since the intra-prediction mode for predicting a picture block is derived at the encoder and needs to be signaled to the decoder. Thus, in order to reduce the signaling overhead the following intra prediction mode coding scheme has been suggested based on a most probable mode (MPM) list (or set) containing 6 of the 67 intra prediction modes, a selected mode list containing 16 of the 67 intra prediction modes and a non-selected mode list containing the remaining 45 intra prediction modes. The 16 intra prediction modes for the selected mode list are selected from a fixed set of intra prediction modes by ordering the remaining 61 intra prediction modes not included in the most probable modes list on the basis of their respective intra prediction mode index and selecting the following elements therefrom: {0, 4, 8, 12, 16, 20, ..., 60}. This can be disadvantageous in certain cases in that the selected mode list is not adaptive with respect to the properties of a currently processed picture block.

Thus, there is a need for improved devices and methods for video coding, which allow increasing the coding efficiency for intra prediction.

WO 2016/204478 A1 discloses an intra prediction mode based image processing method, and an apparatus therefor.

### SUMMARY

It is an object of the invention to provide improved devices and methods for video coding, which allow increasing the coding efficiency for intra prediction.

The foregoing and other objects are achieved by the subject matter of the independent claims. Further implementation forms are apparent from the dependent claims, the description and the figures.

Generally, embodiments of the invention are based on the idea to include into the selected modes list in addition to the intra prediction modes of the immediate neighbors of a currently processed picture block, i.e. the first tier neighbors of the current picture block, the intra prediction modes of the second tier neighbors of the current picture block, i.e. the immediate neighbors of the first tier neighbors of the current picture block. This has the advantage that correlations between the intra prediction mode of the current picture block and the intra prediction modes of its second tier neighbors can result in an improved coding efficiency.

Thus, an improved encoding apparatus for image and video coding is provided, which allows increasing the encoding efficiency for intra prediction.

Thus, an improved method is provided, which allows increasing the coding efficiency for intra prediction.

The invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an apparatus according to an embodiment;
Fig. 2 shows a schematic diagram illustrating the generation of a MPM list implemented in an apparatus according to an embodiment;
Fig. 3 shows a schematic diagram illustrating the generation of a selected modes list implemented in an apparatus according to an embodiment;
Fig. 4 shows a schematic diagram illustrating an encoding apparatus according to an embodiment and a decoding apparatus according to an embodiment;
Fig. 5 shows a schematic diagram illustrating a method according to an embodiment;
Fig. 6 shows a table illustrating different intra prediction mode signaling schemes implemented in an apparatus according to an embodiment; and
Fig. 7 shows a diagram illustrating a plurality of intra prediction modes implemented in an apparatus according to an embodiment.

In the various figures, identical reference signs will be used for identical or at least functionally equivalent features.

### DETAILED DESCRIPTION OF THE EMBODIMENTS

In the following description, reference is made to the accompanying drawings, which form part of the disclosure, and in which are shown, by way of illustration, specific aspects in which the invention may be placed. It is understood that other aspects may be utilized and structural or logical changes may be made without departing from the scope of the invention. The following detailed description, therefore, is not to be taken in a limiting sense, as the scope of the invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

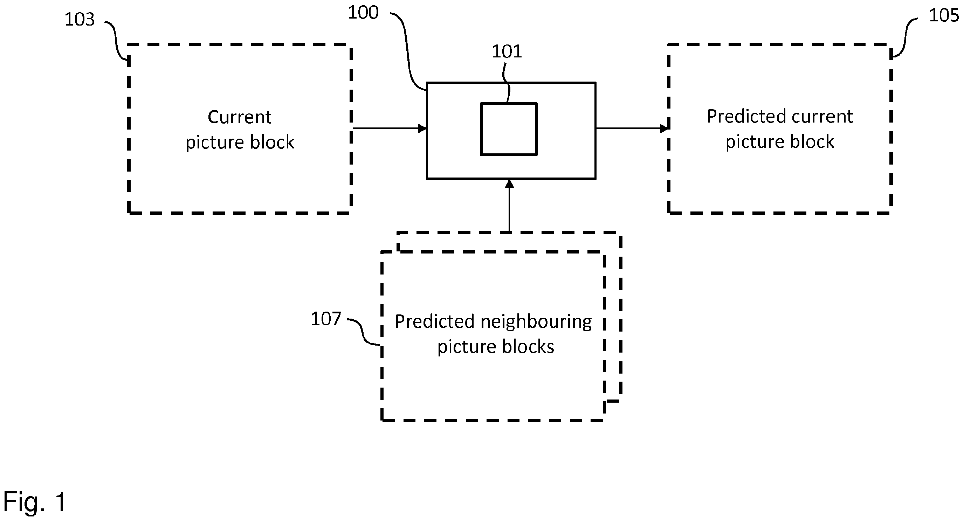

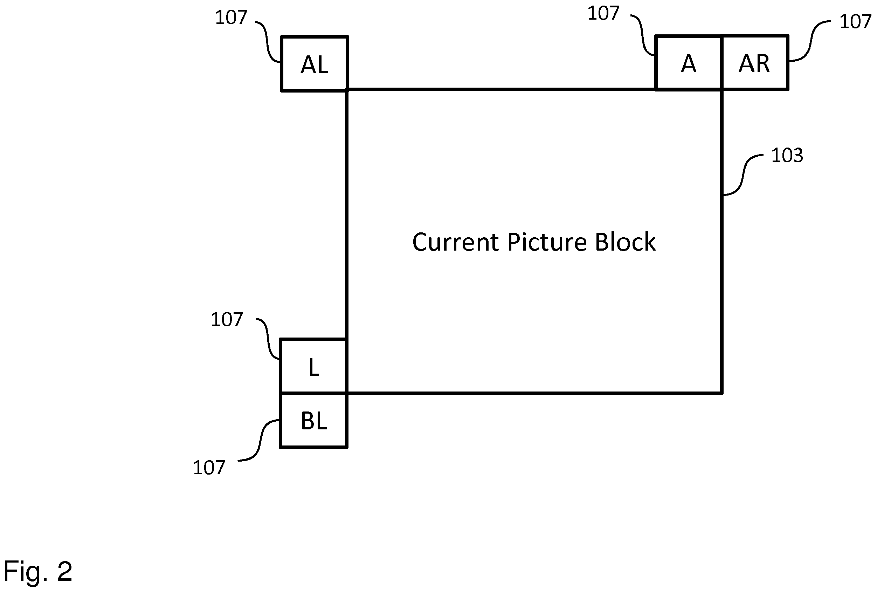

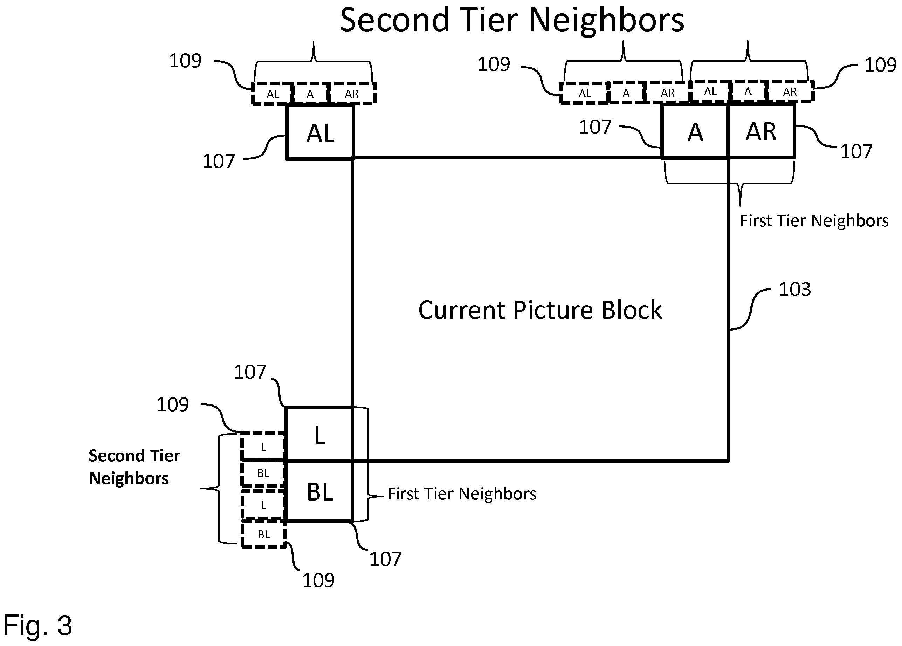

Figure 1 shows a schematic diagram illustrating an apparatus 100 according to an embodiment. As will be discussed in more detail in the context of figures 2 and 3 the apparatus 100 is configured to determine an adopted intra prediction mode on the basis of a most probable modes list, a selected modes list and a non-selected modes list. The adopted intra prediction mode is one of a plurality of intra prediction modes comprising a plurality of angular or directional intra prediction modes for predicting sample values of a current picture block 103. In an embodiment, the adopted intra prediction mode can be determined by the apparatus 100 on the basis of a rate distortion criterion.

The apparatus 100 comprises a processing unit 101 configured to generate at least a portion of the most probable modes list of intra prediction modes by including intra prediction modes adopted for neighboring picture blocks 107 of the current picture block 103, i.e. adopted for the first tier neighbors 107 of the current picture block 103 (shown in figures 1, 2 and 3), in the most probable modes list. Moreover, the processing unit 101 of the apparatus 100 is configured to generate at least a portion of the selected modes list of intra prediction modes by including intra prediction modes adopted for neighboring picture blocks 109 of the neighboring picture blocks 107 of the current picture block 103, i.e. adopted for the second tier neighbors 109 of the current picture block 103 (shown in figure 3), which unlike the first tier neighbors 107 are not direct neighbors of the current picture block 103, in the selected modes list. The processing unit 101 may be processing circuitry. The processing circuitry may be programmable or non-programmable).

As illustrated in figure 1, in an embodiment, the processing unit 101 can be further configured to predict on the basis of samples values of already predicted neighboring blocks 107 sample values of the current picture block 103 using the adopted intra prediction mode and to provide a predicted picture block 105. In an embodiment, the plurality of intra prediction modes comprises the plurality of intra prediction modes defined in the HEVC/H.265 standard or a standard evolved therefrom. In an embodiment, the most probable modes list comprises 6 different intra prediction modes, the selected modes list comprises 16 different intra prediction modes and the non-selected modes list comprises 45 different intra prediction modes.

Figure 2 illustrates the current picture block 103 as processed by the processing unit 101 of the apparatus 100 according to an embodiment as well as exemplary first tier neighbors 107. In the exemplary embodiment shown in figure 2 these exemplary first tier neighbors 107 of the current picture block comprise the neighboring picture block 107 of the current picture block 103 located below and left of the current picture block 103 (referred to as BL), the neighboring picture block 107 located left of the current picture block 103 (referred to as L), the neighboring picture block 107 located above and left of the current picture block 103 (referred to as AL), the neighboring picture block 107 located above the current picture block 103 (referred to as A) and the neighboring picture block 107 located above and right of the current picture block 103 (referred to as AR). As already described above, for constructing the most probable modes list the processing unit 101 is configured to include the intra prediction modes adopted for the first tier neighbors 107 of the current picture block 103 shown in figure 2 into the most probable modes list.

Figure 3 shows in addition to the first tier neighbors 107 shown in figure 2 the second tier neighbors 109 of the current picture block as processed by the processing unit 101 of the apparatus 100 according to an embodiment. For instance, the picture blocks 109 above left (AL), above (A) and above right (AR) of the first tier neighboring block AL 107 are second tier neighbors of the current picture block. As already described above, for constructing the selected modes list of intra prediction modes the processing unit is configured to include intra prediction modes adopted, for instance, for the picture blocks 109 above left (AL), above (A) and above right (AR) of the first tier neighboring block AL 107 in the selected modes list (provided a given mode is not already included in the list and the list is not complete, i.e. full yet). As mentioned above, in an embodiment the selected modes list can accommodate 16 different intra prediction modes.

According to another embodiment the "Second tier neighbors", derived as previously described with reference to figure 3, can also be included in the MPM list. The specific order of insertion is as follows: The first tier neighbors 107 Left (L), Above (A), Planar Mode, followed by remaining first tier neighbors below left (BL), Above left (AL), Above Right (AR), and then "Second tier neighbors " are inserted in the order: Left (L) and Top (T) neighbors of the first tier left (L) block, Above (A) block and Above Left (AL) block, and then followed by DC mode.

According to another embodiment, the processing unit 101 of the apparatus 100 is configured to generate at least the portion of the most probable modes list of intra prediction modes by including intra prediction modes adopted for neighboring picture blocks 107 of the current picture block 103 and intra prediction modes adopted for neighboring picture blocks 109 of the neighboring picture blocks 107 of the current picture block 103 in the most probable modes list; and generate at least the portion of the selected modes list of intra prediction modes by including remaining intra prediction modes adopted for neighboring picture blocks 109 of the neighboring picture blocks 107 of the current picture block 103 in the selected modes list. In other words, the processing unit 101 is configured to take into account the intra prediction modes of the first tier 107 and second tier neighbors 109 of the current picture block for generating the most probable modes list and to include the remaining intra prediction modes in the selected modes list.

Further embodiments of the apparatus 100 will be described in the following.

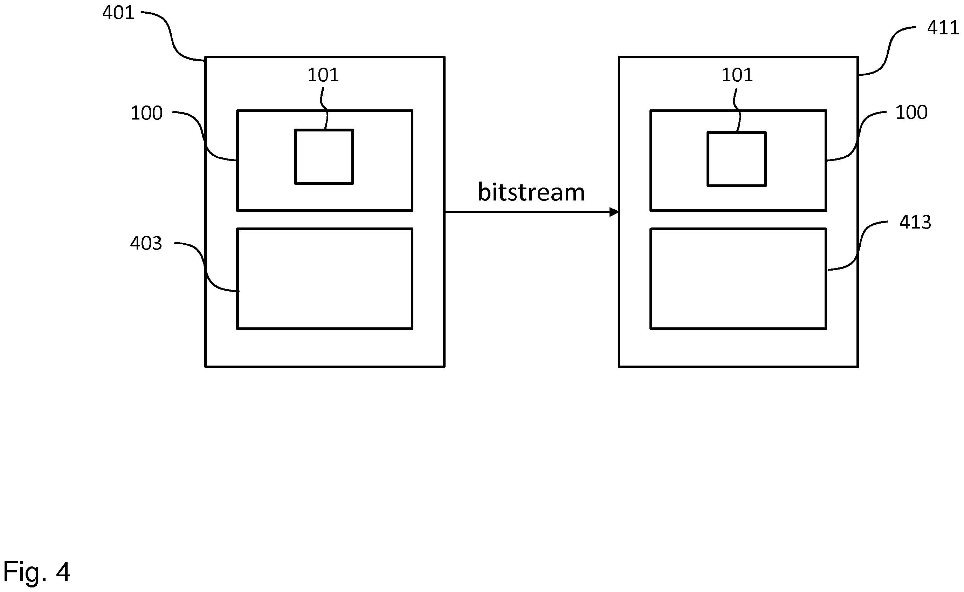

Figure 4 shows a schematic diagram illustrating an encoding apparatus 401 according to an embodiment and a decoding apparatus 411 according to an embodiment.

The encoding apparatus 401 is configured to encode a current picture block 103 of a picture, wherein the current picture block 103 comprises a plurality of samples and each sample is associated with a sample value. The encoding apparatus 401 comprises the apparatus 100 according to an embodiment for providing a predicted picture block 105 and an encoding unit 403 configured to encode the current picture block 103 on the basis of the predicted picture block 105 and the adopted intra prediction mode, for instance, in the form of a bitstream. In an embodiment, the encoding apparatus 201 could be implemented as a hybrid encoder, as defined, for instance, in the HEVC standard, and could comprise further components, such as an entropy encoder.

The decoding apparatus 411 is configured to decode an encoded picture block of a picture, which is contained in the bitstream provided by the encoding apparatus 401, wherein the encoded picture block comprises a plurality of samples and each sample is associated with a sample value. The decoding apparatus 411 comprises the apparatus 100 according to an embodiment for providing a predicted picture block 105 and a restoration unit 413 configured to restore a picture block on the basis of an encoded adopted intra prediction mode, an encoded picture block and the predicted picture block 105. In an embodiment, the decoding apparatus 211 could be implemented as a hybrid decoder, as defined, for instance, in the HEVC standard, and could comprise further components, such as a decoding unit for providing a residual picture block on the basis of the encoded picture block.

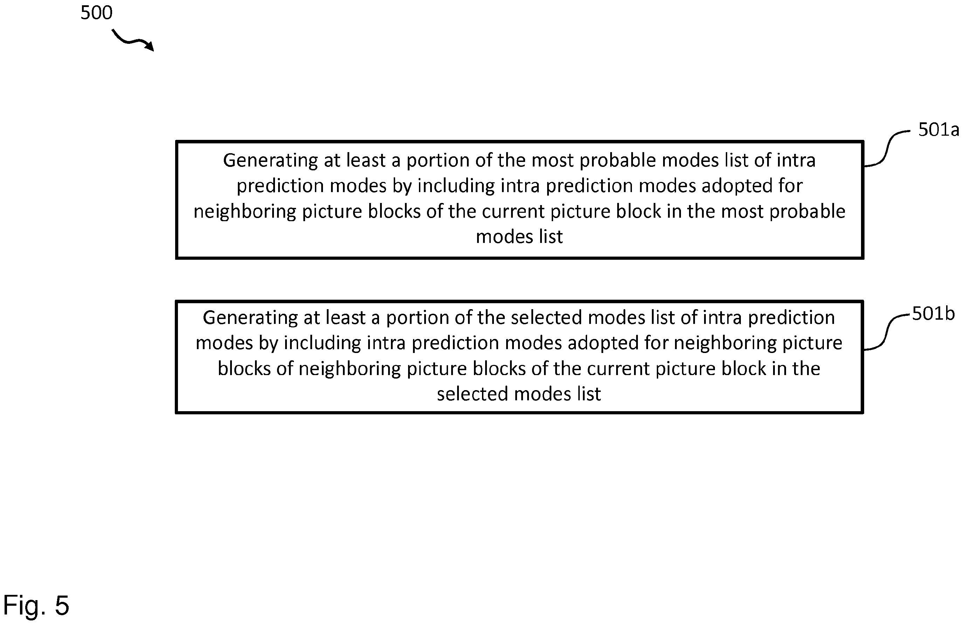

Figure 5 illustrates a method 500 of determining an adopted intra prediction mode on the basis of a most probable modes list, a selected modes list and a non-selected modes list. The method 500 can be performed by the apparatus 100. As already described above, the adopted intra prediction mode is one of a plurality of intra prediction modes comprising a plurality of angular or directional intra prediction modes for intra predicting sample values of the current picture block 103.

The method 500 comprises the steps of: generating 501a at least a portion of the most probable modes list of intra prediction modes by including intra prediction modes adopted for the neighboring picture blocks 107 of the current picture block 103 in the most probable modes list; and generating 501b at least a portion of the selected modes list of intra prediction modes by including intra prediction modes adopted for neighboring picture blocks 109 of the neighboring picture blocks 107 of the current picture block 103 in the selected modes list. These steps can be performed in any order sequentially, partially overlapping or in parallel.

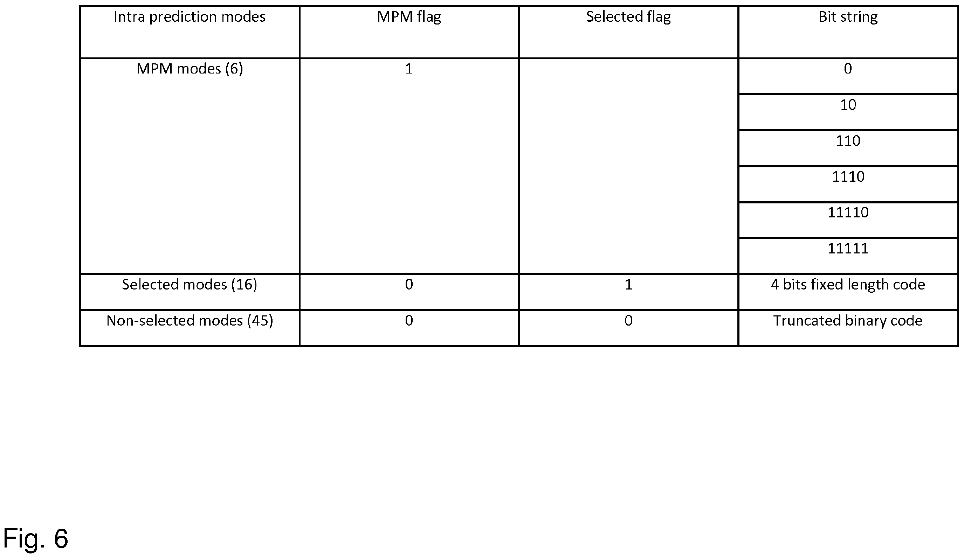

Figure 6 shows a table illustrating different intra prediction mode signaling schemes implemented in the apparatus 100, the encoding apparatus 401 and/or the decoding apparatus 411 according to an embodiment. As can be taken from the table shown in figure 6, according to an embodiment the intra prediction modes of the most probable modes (MPM) list are encoded using an MPM flag (1) and a truncated unary binarization. The intra prediction modes of the selected modes list are encoded using the MPM flag (0), a selected flag (1) and a fixed length code (4 bits in the case of 16 modes). The intra-prediction modes of the non-selected modes list are encoded using the MPM flag (0), the selected flag (0) and a truncated binary code (5 or 6 bits in the case of 45 modes).

In an embodiment, the processing unit 101 of the apparatus 100 is configured to construct the most probable modes (MPM) list on the basis of intra prediction modes adopted for neighboring picture blocks 107 of the current picture block 103, i.e. adopted for the first tier neighbors 107 of the current picture block 103, in the following way.

In an embodiment, five neighboring intra prediction modes are used to form the MPM list. Those locations of the 5 neighboring blocks are the same as those used in the merge mode, i.e., left (L), above (A), below left (BL), above right (AR), and above left (AL) as shown in figure 2. An initial MPM list is formed by inserting the 5 neighbor intra prediction modes, the planar mode, and the DC mode into the MPM list. A pruning process can be used to remove any duplicate mode so that only unique modes are included into the MPM list. The order in which the initial modes are included can be left (L), above (A), planar, DC, below left (BL), above right (AR), and above left (AL).

In an embodiment, the current picture block 103 can be part of a coding tree unit (CTU). In such a case an embodiment of the apparatus 100 is advantageous, where the processing unit 101 is configured to include intra prediction modes adopted for the second tier neighbors 109 of the current picture block 103 in the selected modes list only for those second tier neighbors 109 that belong to the same coding tree unit the current picture block 103 belongs to.

In an embodiment, each intra prediction mode can be identified by a unique intra prediction mode index. In an embodiment, the processing unit 101 of the apparatus 100 can be further configured to complete the selected modes list by including one or more angular or directional intra prediction modes in the selected modes list (provided a given mode is not already included in the list and the list is not complete, i.e. full yet), whose respective intra prediction mode index has an offset of +1 or -1 with respect to an intra prediction mode index of an angular intra prediction mode adopted for one of the second tier neighbors 109 of the current picture block 103.

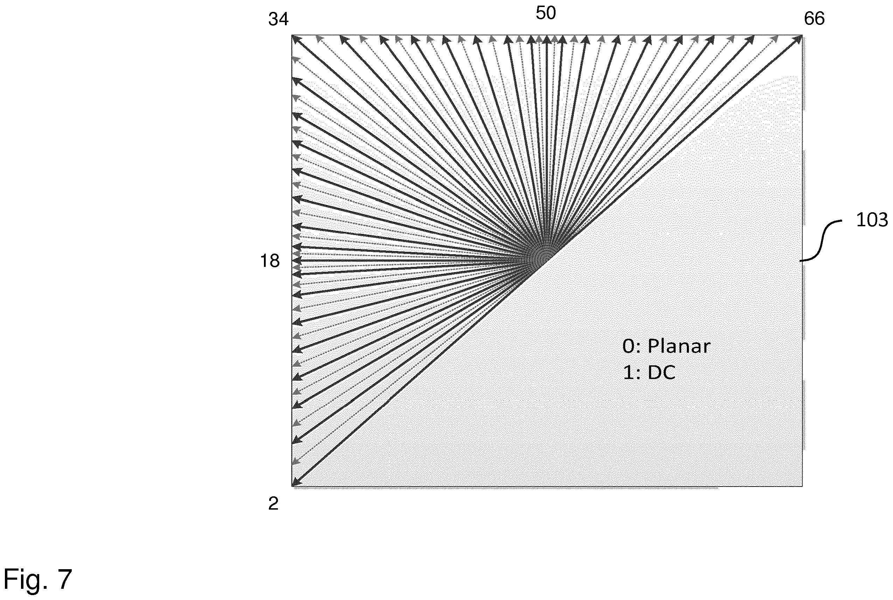

In an embodiment, the processing unit 101 of the apparatus is further configured to: (i) rank a plurality of angular intra prediction mode categories according to the number of angular intra prediction modes of the most probable modes list and/or the selected modes list falling within each angular intra prediction mode category, and (ii) complete the selected modes list (provided a given mode is not already included in the list and the list is not complete, i.e. full yet) by including one or more angular intra prediction modes from the highest ranked angular intra prediction mode category in the selected modes list. If after these steps the selected modes list should still not be full, step (ii) can be repeated with the second highest ranked angular intra prediction mode category and so on until the selected modes list is complete. Figure 7 illustrates an implementation, where the processing unit 101 is configured to define the plurality of angular intra prediction mode categories on the basis of the respective angular intra prediction mode identified by the intra prediction mode index 2, 18, 34, 50 and/or 66, i.e. the directional modes pointing to the bottom left corner (2), horizontally to the left (18), to the top left corner (34), vertically to the top (50) and to the top right corner (66).

In an embodiment, the processing unit 101 is further configured to complete the selected modes list (provided a given mode is not already included in the list and the list is not complete, i.e. full yet) by including one or more angular intra prediction modes in the selected modes list, whose respective intra prediction mode index has an offset of +1, -1, +2, -2, +3 or -3 with respect to an intra prediction mode index of an angular intra prediction mode already included in the selected modes list.

While a particular feature or aspect of the disclosure may have been disclosed with respect to only one of several implementations or embodiments, such a feature or aspect may be combined with one or more further features or aspects of the other implementations or embodiments as may be desired or advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives thereof may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the invention has been described with reference to one or more particular embodiments, those skilled in the art recognize that many changes may be made thereto without departing from the scope of the invention. It is therefore to be understood that within the scope of the appended claims and their equivalents, the invention may be practiced otherwise than as specifically described herein.

## Claims

1. An apparatus (100) configured to determine an adopted intra prediction mode on the basis of a most probable modes list, a selected modes list and a non-selected modes list, wherein the adopted intra prediction mode is one of a plurality of intra prediction modes comprising a plurality of angular intra prediction modes for predicting sample values of a current picture block (103), wherein the apparatus (100) comprises:
a processing unit (101) configured to:
generate at least a portion of the most probable modes list of intra prediction modes by including intra prediction modes adopted for neighboring picture blocks (107) of the current picture block (103) in the most probable modes list,
generate at least a portion of the selected modes list of intra prediction modes by including intra prediction modes adopted for neighboring picture blocks (109) of the neighboring picture blocks (107) of the current picture block (103) in the selected modes list, wherein the neighboring picture blocks (109) of the neighboring picture blocks (107) of the current picture block (103) are not direct neighboring blocks (107) of the current picture block (103).

2. The apparatus (100) of claim 1, wherein the most probable modes list comprises one or more of the following: a planar intra prediction mode, a DC intra prediction mode, the intra prediction mode adopted for the neighboring picture block (107) of the current picture block (103) located below and left of the current picture block (103), the intra prediction mode adopted for the neighboring picture block (107) of the current picture block (103) located left of the current picture block (103), the intra prediction mode adopted for the neighboring picture block (107) of the current picture block (103) located above and left of the current picture block (103), the intra prediction mode adopted for the neighboring picture block (107) of the current picture block (103) located above the current picture block (103) and the intra prediction mode adopted for the neighboring picture block (107) of the current picture block (103) located above and right of the current picture block (103).

3. The apparatus (100) of claim 1 or 2, wherein the processing unit (101) is configured to:
generate at least the portion of the most probable modes list of intra prediction modes by including intra prediction modes adopted for neighboring picture blocks (107) of the current picture block (103) and intra prediction modes adopted for neighboring picture blocks (109) of the neighboring picture blocks (107) of the current picture block (103) in the most probable modes list; and
generate at least the portion of the selected modes list of intra prediction modes by including remaining intra prediction modes adopted for neighboring picture blocks (109) of the neighboring picture blocks (107) of the current picture block (103) in the selected modes list.

4. The apparatus (100) of claim 1 or 2, wherein the processing unit (101) is configured to:
generate at least the portion of the most probable modes list of intra prediction modes by including intra prediction modes adopted for neighboring picture blocks (107) of the current picture block (103) and intra prediction modes adopted for neighboring picture blocks (109) of the neighboring picture blocks (107) of the current picture block (103) in the most probable modes list; and
generate at least a remaining portion of the most probable modes list of intra prediction modes by including intra prediction modes adopted for neighboring picture blocks (109) of the current picture block (103) in the most probable modes list.

5. The apparatus (100) of claim 4, wherein the most probable modes, MPM, list comprises a mode of the neighboring picture block (107) of the current picture block (103) located left, followed by a mode of the neighboring picture block (107) of the current picture block (103) located top, followed by a planar prediction mode, followed by a mode of the neighboring picture block (107) of the current picture block (103) located below left, followed by a mode of the neighboring picture block (107) of the current picture block (103) located above right, followed by a neighboring picture block (107) of the current picture block (103) located above left, followed by the remaining intra prediction modes adopted for neighboring picture blocks (109) of the neighboring picture blocks (107) of the current picture block (103) in the MPM list, followed by DC mode.

6. The apparatus (100) of any one of the preceding claims, wherein the current picture block (103) belongs to a coding tree unit and wherein the processing unit (101) is configured to include intra prediction modes adopted for the neighboring picture blocks (109) of the neighboring picture blocks (107) of the current picture block (103) in the selected modes list only for those neighboring picture blocks (109) of the neighboring picture blocks (107) of the current picture block (103) that belong to the same coding tree unit the current picture block (103) belongs to.

7. The apparatus (100) of any one of the preceding claims, wherein each intra prediction mode is identified by an intra prediction mode index and wherein the processing unit (101) is further configured to complete the selected modes list by including one or more angular intra prediction modes in the selected modes list, whose respective intra prediction mode index has an offset of +1 or -1 with respect to an intra prediction mode index of an angular intra prediction mode adopted for one of the neighboring picture blocks (109) of the neighboring picture blocks (107) of the current picture block (103).

8. The apparatus (100) of any one of the preceding claims, wherein the processing unit (101) is further configured to:
(i) rank a plurality of angular intra prediction mode categories according to the number of angular intra prediction modes of the most probable modes list and/or according to the number of angular intra prediction modes of the selected modes list falling within each angular intra prediction mode category; and
(ii) complete the selected modes list by including one or more angular intra prediction modes from the highest ranked angular intra prediction mode category in the selected modes list.

9. The apparatus (100) of claim 8, wherein the processing unit (101) is further configured to complete the selected modes list by repeating step (ii) with the second highest ranked angular intra prediction mode category.

10. The apparatus (100) of claim 8 or 9, wherein the processing unit (101) is configured to define the plurality of angular intra prediction mode categories on the basis of the respective angular intra prediction mode identified by the intra prediction mode index 2, 18, 34, 50 or 66.

11. The apparatus (100) of any one of the preceding claims, wherein each intra prediction mode is identified by an intra prediction mode index and wherein the processing unit (101) is further configured to complete the selected modes list by including one or more angular intra prediction modes in the selected modes list, whose respective intra prediction mode index has an offset of +1, -1, +2, -2, +3 or -3 with respect to an intra prediction mode index of an angular intra prediction mode already included in the selected modes list.

12. The apparatus (100) of any one of the preceding claims, wherein the plurality of intra prediction modes comprise the plurality of intra prediction modes defined in the HEVC/H.265 standard or a standard evolved therefrom.

13. The apparatus (100) of any one of the preceding claims, wherein the processing unit (101) is further configured to predict sample values of the current picture block (103) using the adopted intra prediction mode and to provide a predicted picture block (105).

14. An encoding apparatus (401) for encoding a current picture block (103) of a picture, the current picture block (103) comprising a plurality of samples, each sample being associated with a sample value, the encoding apparatus (401) comprising:
an apparatus (100) according to claim 13 for providing a predicted picture block (105); and
an encoding unit (403) configured to encode the current picture block (103) on the basis of the predicted picture block (105) and the adopted intra prediction mode.

15. A decoding apparatus (411) for decoding an encoded picture block of a picture, the encoded picture block comprising a plurality of samples, each sample being associated with a sample value, the decoding apparatus (411) comprising:
an apparatus (100) according to claim 13 for providing a predicted picture block (105); and
a restoration unit (413) configured to restore a picture block on the basis of an encoded adopted intra prediction mode, an encoded picture block and the predicted picture block (105).

16. A method (500) of determining an adopted intra prediction mode on the basis of a most probable modes list, a selected modes list and a non-selected modes list, wherein the adopted intra prediction mode is one of a plurality of intra prediction modes comprising a plurality of angular intra prediction modes for intra predicting sample values of a current picture block (103), wherein the method (500) comprises:
generating (501a) at least a portion of the most probable modes list of intra prediction modes by including intra prediction modes adopted for neighboring picture blocks (107) of the current picture block (103) in the most probable modes list; and
generating (501b) at least a portion of the selected modes list of intra prediction modes by including intra prediction modes adopted for neighboring picture blocks (109) of the neighboring picture blocks (107) of the current picture block (103) in the selected modes list, wherein the neighboring picture blocks (109) of the neighboring picture blocks (107) of the current picture block (103) are not direct neighboring blocks (107) of the current picture block (103).

17. A computer program product comprising program code for performing the method (500) of claim 16 when executed on a computer or a processor.

## Patentansprüche

1. Gerät (100), das so konfiguriert ist, dass es einen angenommenen Intra-Vorhersagemodus auf der Grundlage einer Liste der wahrscheinlichsten Modi, einer Liste ausgewählter Modi und einer Liste nicht ausgewählter Modi bestimmt, wobei der angenommene Intra-Vorhersagemodus einer aus einer Vielzahl von Intra-Vorhersagemodi ist, die eine Vielzahl von winkelförmigen Intra-Vorhersagemodi zum Vorhersagen von Abtastwerten eines aktuellen Bildblocks (103) umfassen, wobei das Gerät (100) Folgendes umfasst:
eine Verarbeitungseinheit (101), die konfiguriert ist zum:
Erzeugen mindestens eines Abschnitts der Liste der wahrscheinlichsten Modi der Intra-Vorhersagemodi durch Einschließen der Intra-Vorhersagemodi, die für benachbarte Bildblöcke (107) des aktuellen Bildblocks (103) angenommen wurden, in die Liste der wahrscheinlichsten Modi,
Erzeugen mindestens eines Abschnitts der ausgewählten Modi-Liste von Intra-Vorhersagemodi durch Einschließen von Intra-Vorhersagemodi, die für benachbarte Bildblöcke (109) der benachbarten Bildblöcke (107) des aktuellen Bildblocks (103) angenommen wurden, in die ausgewählte Modi-Liste, wobei die benachbarten Bildblöcke (109) der benachbarten Bildblöcke (107) des aktuellen Bildblocks (103) keine direkt benachbarten Blöcke (107) des aktuellen Bildblocks (103) sind.

2. Gerät (100) nach Anspruch 1, wobei die Liste der wahrscheinlichsten Modi eines oder mehrere der folgenden umfasst: einen planaren Intra-Vorhersagemodus, einen DC-Intra-Vorhersagemodus, wobei der Intra-Vorhersagemodus für den benachbarten Bildblock (107) des aktuellen Bildblocks (103) angenommen wird, der sich unterhalb und links von dem aktuellen Bildblock (103) befindet, den Intra-Vorhersagemodus, der für den benachbarten Bildblock (107) des aktuellen Bildblocks (103) angenommen wird, der sich links von dem aktuellen Bildblock (103) befindet, der Intra-Vorhersagemodus, der für den benachbarten Bildblock (107) des aktuellen Bildblocks (103) angenommen wird, der sich oberhalb und links des aktuellen Bildblocks (103) befindet, der Intra-Vorhersagemodus, der für den benachbarten Bildblock (107) des aktuellen Bildblocks (103) angenommen wird, der sich oberhalb des aktuellen Bildblocks (103) befindet, und der Intra-Vorhersagemodus, der für den benachbarten Bildblock (107) des aktuellen Bildblocks (103) angenommen wird, der sich oberhalb und rechts des aktuellen Bildblocks (103) befindet.

3. Gerät (100) nach Anspruch 1 oder 2, wobei die Verarbeitungseinheit (101) konfiguriert ist zum:
Erzeugen mindestens des Abschnitts der Liste der wahrscheinlichsten Modi der Intra-Vorhersagemodi durch Einschließen der Intra-Vorhersagemodi, die für benachbarte Bildblöcke (107) des aktuellen Bildblocks (103) angenommen wurden, und der Intra-Vorhersagemodi, die für benachbarte Bildblöcke (109) der benachbarten Bildblöcke (107) des aktuellen Bildblocks (103) angenommen wurden, in der Liste der wahrscheinlichsten Modi; und
Erzeugen mindestens des Abschnitts der Liste ausgewählter Modi von Intra-Vorhersagemodi durch Einschließen der verbleibenden Intra-Vorhersagemodi, die für benachbarte Bildblöcke (109) der benachbarten Bildblöcke (107) des aktuellen Bildblocks (103) angenommen wurden, in die Liste ausgewählter Modi.

4. Gerät (100) nach Anspruch 1 oder 2, wobei die Verarbeitungseinheit (101) konfiguriert ist zum:
Erzeugen mindestens des Abschnitts der Liste der wahrscheinlichsten Modi der Intra-Vorhersagemodi durch Einschließen der Intra-Vorhersagemodi, die für benachbarte Bildblöcke (107) des aktuellen Bildblocks (103) angenommen wurden, und der Intra-Vorhersagemodi, die für benachbarte Bildblöcke (109) der benachbarten Bildblöcke (107) des aktuellen Bildblocks (103) angenommen wurden, in der Liste der wahrscheinlichsten Modi; und
Erzeugen mindestens eines verbleibenden Abschnitts der Liste der wahrscheinlichsten Intra-Vorhersagemodi durch Einschließen von Intra-Vorhersagemodi, die für benachbarte Bildblöcke (109) des aktuellen Bildblocks (103) angenommen wurden, in die Liste der wahrscheinlichsten Modi.

5. Gerät (100) nach Anspruch 4, wobei die Liste der wahrscheinlichsten Modi, MPM, einen Modus des benachbarten Bildblocks (107) des aktuellen Bildblocks (103) umfasst, der sich links befindet, gefolgt von einem Modus des benachbarten Bildblocks (107) des aktuellen Bildblocks (103), der sich oben befindet, gefolgt von einem planaren Vorhersagemodus, gefolgt von einem Modus des benachbarten Bildblocks (107) des aktuellen Bildblocks (103), der sich unten links befindet, gefolgt von einem Modus des benachbarten Bildblocks (107) des aktuellen Bildblocks (103), der sich oberhalb von rechts befindet, gefolgt von einem benachbarten Bildblock (107) des aktuellen Bildblocks (103), der sich oberhalb von links befindet, gefolgt von den übrigen Intra-Vorhersagemodi, die für benachbarte Bildblöcke (109) der benachbarten Bildblöcke (107) des aktuellen Bildblocks (103) in der MPM-Liste angenommen wurden, gefolgt vom DC-Modus.

6. Gerät (100) nach einem der vorhergehenden Ansprüche, wobei der aktuelle Bildblock (103) zu einer Kodierungsbaumeinheit gehört und wobei die Verarbeitungseinheit (101) so konfiguriert ist, dass sie Intra-Vorhersagemodi, die für die benachbarten Bildblöcke (109) der benachbarten Bildblöcke (107) des aktuellen Bildblocks (103) übernommen wurden, nur für diejenigen benachbarten Bildblöcke (109) der benachbarten Bildblöcke (107) des aktuellen Bildblocks (103) in die Liste der ausgewählten Modi einschließt, die zu derselben Kodierungsbaumeinheit gehören, zu der der aktuelle Bildblock (103) gehört.

7. Gerät (100) nach einem der vorhergehenden Ansprüche, wobei jede Intra-Vorhersagemodi durch einen Intra-Vorhersagemodi-Index identifiziert wird und wobei die Verarbeitungseinheit (101) ferner so konfiguriert ist, dass sie die Liste der ausgewählten Modi vervollständigt, indem sie einen oder mehrere winkelförmige Intra-Vorhersagemodi in die Liste der ausgewählten Modi einschließt, deren jeweiliger Intra-Vorhersagemodi-Index einen Versatz von +1 oder -1 in Bezug auf einen Intra-Vorhersagemodi-Index eines winkelförmigen Intra-Vorhersagemodi aufweist, der für einen der benachbarten Bildblöcke (109) der benachbarten Bildblöcke (107) des aktuellen Bildblocks (103) angenommen wurde.

8. Gerät (100) nach einem der vorhergehenden Ansprüche, wobei die Verarbeitungseinheit (101) ferner konfiguriert ist zum:
(i) Rangieren einer Vielzahl von Intra-Vorhersagemodi-Kategorien gemäß der Anzahl der Intra-Vorhersagemodi der Liste der wahrscheinlichsten Modi und/oder gemäß der Anzahl der Intra-Vorhersagemodi der ausgewählten Modi-Liste, die in jede Intra-Vorhersagemodi-Kategorie fallen; und
(ii) Vervollständigen der Liste der ausgewählten Intra-Vorhersagemodi, indem Sie einen oder mehrere Intra-Vorhersagemodi aus der am höchsten rangierenden Kategorie von Intra-Vorhersagemodi in die Liste der ausgewählten Modi einschließen.

9. Gerät (100) nach Anspruch 8, wobei die Verarbeitungseinheit (101) ferner so konfiguriert ist, dass sie die Liste der ausgewählten Modi vervollständigt, indem sie den Schritt (ii) mit der zweithöchsten rangierenden Kategorie von Intra-Vorhersagemodi wiederholt.

10. Gerät (100) nach Anspruch 8 oder 9, wobei die Verarbeitungseinheit (101) so konfiguriert ist, dass sie die Vielzahl von Intra-Vorhersagemodi-Kategorien auf der Grundlage des jeweiligen Intra-Vorhersagemodi, der durch den Intra-Vorhersagemodi-Index 2, 18, 34, 50 oder 66 identifiziert wird, definiert.

11. Gerät (100) nach einem der vorhergehenden Ansprüche, wobei jede Intra-Vorhersagemodi durch einen Intra-Vorhersagemodi-Index identifiziert wird und wobei die Verarbeitungseinheit (101) ferner so konfiguriert ist, dass sie die Liste der ausgewählten Modi vervollständigt, indem sie einen oder mehrere winkelförmige Intra-Vorhersagemodi in die Liste der ausgewählten Modi schließt, deren jeweiliger Intra-Vorhersagemodi-Index einen Versatz von +1, -1, +2, -2, +3 oder -3 in Bezug auf einen Intra-Vorhersagemodi-Index eines winkelförmigen Intra-Vorhersagemodi aufweist, der bereits in der Liste der ausgewählten Modi enthalten ist.

12. Gerät (100) nach einem der vorhergehenden Ansprüche, wobei die Vielzahl von Intra-Vorhersagemodi die Vielzahl von Intra-Vorhersagemodi umfasst, die in dem HEVC/H.265-Standard oder einem daraus entwickelten Standard definiert sind.

13. Gerät (100) nach einem der vorhergehenden Ansprüche, wobei die Verarbeitungseinheit (101) ferner so konfiguriert ist, dass sie Abtastwerte des aktuellen Bildblocks (103) unter Verwendung des angenommenen Intra-Vorhersagemodus vorhersagt und einen vorhergesagten Bildblock (105) bereitstellt.

14. Kodiergerät (401) zum Kodieren eines aktuellen Bildblocks (103) eines Bildes, wobei der aktuelle Bildblock (103) eine Vielzahl von Proben umfasst, wobei jede Probe einem Abtastwert zugeordnet ist, wobei das Kodiergerät (401) umfasst:
ein Gerät (100) nach Anspruch 13 zum Bereitstellen eines vorhergesagten Bildblocks (105); und
eine Kodiereinheit (403), die so konfiguriert ist, dass sie den aktuellen Bildblock (103) auf der Grundlage des vorhergesagten Bildblocks (105) und des angenommenen Intra-Vorhersagemodi codiert.

15. Dekodierer (411) zum Dekodieren eines kodierten Bildblocks eines Bildes, wobei der kodierte Bildblock eine Vielzahl von Proben umfasst, wobei jede Probe einem Abtastwert zugeordnet ist, wobei der Dekodierer (411) umfasst:
ein Gerät (100) nach Anspruch 13 zum Bereitstellen eines vorhergesagten Bildblocks (105); und
eine Wiederherstellungseinheit (413), die so konfiguriert ist, dass sie einen Bildblock auf der Grundlage eines kodierten angenommenen Intra-Vorhersagemodi, eines kodierten Bildblocks und des vorhergesagten Bildblocks (105) wiederherstellt.

16. Verfahren (500) zum Bestimmen eines angenommenen Intra-Vorhersagemodi auf der Grundlage einer Liste der wahrscheinlichsten Modi, einer Liste ausgewählter Modi und einer Liste nicht ausgewählter Modi, wobei der angenommene Intra-Vorhersagemodi einer aus einer Vielzahl von Intra-Vorhersagemodi ist, die eine Vielzahl von winkelförmigen Intra-Vorhersagemodi für die Intra-Vorhersage von Abtastwerten eines aktuellen Bildblocks (103) umfassen, wobei das Verfahren (500) umfasst:
Erzeugen (501a) mindestens eines Abschnitts der Liste der wahrscheinlichsten Modi der Intra-Vorhersagemodi durch Einschließen der Intra-Vorhersagemodi, die für benachbarte Bildblöcke (107) des aktuellen Bildblocks (103) angenommen wurden, in die Liste der wahrscheinlichsten Modi; und
Erzeugen (501b) mindestens eines Abschnitts der ausgewählten Modi-Liste von Intra-Vorhersagemodi durch Einschließen von Intra-Vorhersagemodi, die für benachbarte Bildblöcke (109) der benachbarten Bildblöcke (107) des aktuellen Bildblocks (103) angenommen wurden, in die ausgewählte Modi-Liste, wobei die benachbarten Bildblöcke (109) der benachbarten Bildblöcke (107) des aktuellen Bildblocks (103) keine direkt benachbarten Blöcke (107) des aktuellen Bildblocks (103) sind.

17. Computerprogrammprodukt, das Programmcode zum Durchführen des Verfahrens (500) nach Anspruch 16 umfasst, wenn es auf einem Computer oder einem Prozessor ausgeführt wird.

## Revendications

1. Appareil (100) configuré pour déterminer un mode de prédiction intra adopté sur la base d'une liste de modes les plus probables, d'une liste de modes sélectionnés et d'une liste de modes non sélectionnés, dans lequel le mode de prédiction intra adopté est l'un parmi une pluralité de modes de prédiction intra adoptés comprenant une pluralité de modes de prédiction intra angulaire pour prédire des valeurs d'échantillon d'un bloc d'image courant (103), dans lequel l'appareil (100) comprend :
une unité de traitement (101) configurée pour :
générer au moins une partie de la liste des modes les plus probables des modes de prédiction intra en incluant des modes de prédiction intra adoptés pour les blocs d'image voisins (107) du bloc d'image courant (103) dans la liste des modes les plus probables,
générer au moins une partie de la liste de modes sélectionnés de modes de prédiction intra en incluant des modes de prédiction intra adoptés pour des blocs d'image voisins (109) des blocs d'image voisins (107) du bloc d'image courant (103) dans la liste de modes sélectionnés, dans lequel les blocs d'image voisins (109) des blocs d'image voisins (107) du bloc d'image courant (103) ne sont pas des blocs voisins directs (107) du bloc d'image courant (103).

2. Appareil (100) selon la revendication 1, dans lequel la liste des modes les plus probables comprend un ou plusieurs des éléments suivants : un mode de prédiction intra planaire, un mode de prédiction intra CC, le mode de prédiction intra adopté pour le bloc d'image voisin (107) du bloc d'image courant (103) situé en dessous et à gauche du bloc d'image courant (103), le mode de prédiction intra adopté pour le bloc d'image voisin (107) du bloc d'image courant (103) situé à gauche du bloc d'image courant (103), le mode de prédiction intra adopté pour le bloc d'image voisin (107) du bloc d'image courant (103) situé au-dessus et à gauche du bloc d'image courant (103), le mode de prédiction intra adopté pour le bloc d'image voisin (107) du bloc d'image courant (103) situé au-dessus du bloc d'image courant (103) et le mode de prédiction intra adopté pour le bloc d'image voisin (107) du bloc d'image courant (103) situé au-dessus et à droite du bloc d'image courant (103).

3. Appareil (100) selon la revendication 1 ou 2, dans lequel l'unité de traitement (101) est configurée pour :
générer au moins la partie de la liste des modes les plus probables des modes de prédiction intra en incluant des modes de prédiction intra adoptés pour les blocs d'image voisins (107) du bloc d'image courant (103) et des modes de prédiction intra adoptés pour les blocs d'image voisins (109) des blocs d'image voisins (107) du bloc d'image courant (103) dans la liste des modes les plus probables ; et
générer au moins la partie de la liste des modes sélectionnés de modes de prédiction intra en incluant les modes de prédiction intra restants adoptés pour les blocs d'image voisins (109) des blocs d'image voisins (107) du bloc d'image courant (103) dans la liste de modes sélectionnés.

4. Appareil (100) selon la revendication 1 ou 2, dans lequel l'unité de traitement (101) est configurée pour :
générer au moins la partie de la liste des modes les plus probables des modes de prédiction intra en incluant des modes de prédiction intra adoptés pour les blocs d'image voisins (107) du bloc d'image courant (103) et des modes de prédiction intra adoptés pour les blocs d'image voisins (109) des blocs d'image voisins (107) du bloc d'image courant (103) dans la liste des modes les plus probables ; et
générer au moins une partie restante de la liste des modes les plus probables des modes de prédiction intra en incluant des modes de prédiction intra adoptés pour les blocs d'image voisins (109) du bloc d'image courant (103) dans la liste des modes les plus probables.

5. Appareil (100) selon la revendication 4, dans lequel la liste des modes les plus probables, MPM, comprend un mode du bloc d'image voisin (107) du bloc d'image courant (103) situé à gauche, suivi d'un mode du bloc d'image voisin (107) du bloc d'image courant (103) situé en haut, suivi d'un mode de prédiction planaire, suivi d'un mode du bloc d'image voisin (107) du bloc d'image courant (103) situé en bas à gauche, suivi d'un mode du bloc d'image voisin (107) du bloc d'image courant (103) situé en haut à droite, suivi d'un bloc d'image voisin (107) du bloc d'image courant (103) situé en haut à gauche, suivi des modes de prédiction intra restants adoptés pour des blocs d'image voisins (109) des blocs d'image voisins (107) du bloc d'image courant (103) dans la liste MPM, suivis du mode CC.

6. Appareil (100) selon l'une quelconque des revendications précédentes, dans lequel le bloc d'image courant (103) appartient à une unité d'arbre de codage et dans lequel l'unité de traitement (101) est configurée pour inclure des modes de prédiction intra adoptés pour les blocs d'image voisins (109) des blocs d'image voisins (107) du bloc d'image courant (103) dans la liste des modes sélectionnés uniquement pour les blocs d'image voisins (109) des blocs d'image voisins (107) du bloc d'image courant (103) qui appartiennent à la même unité d'arbre de codage à laquelle le bloc d'image courant (103) appartient.

7. Appareil (100) selon l'une quelconque des revendications précédentes, dans lequel chaque mode de prédiction intra est identifié par un indice de mode de prédiction intra et dans lequel l'unité de traitement (101) est en outre configurée pour compléter la liste des modes sélectionnés en incluant un ou plusieurs modes de prédiction intra angulaire dans la liste des modes sélectionnés, dont l'indice de mode de prédiction intra respectif a un décalage de +1 ou -1 par rapport à un indice de mode de prédiction intra d'un mode de prédiction intra angulaire adopté pour l'un des blocs d'image voisins (109) des blocs d'image voisins (107) du bloc d'image courant (103).

8. Appareil (100) selon l'une quelconque des revendications précédentes, dans lequel l'unité de traitement (101) est en outre configurée pour :
(i) classer une pluralité de catégories de mode de prédiction intra angulaire selon le nombre de modes de prédiction intra angulaire de la liste des modes les plus probables et/ou selon le nombre de modes de prédiction intra angulaire de la liste de modes sélectionnée tombant dans chaque catégorie de mode de prédiction intra angulaire ; et
(ii) compléter la liste des modes sélectionnés en incluant un ou plusieurs modes de prédiction intra angulaire à partir de la catégorie de mode de prédiction intra angulaire la mieux classée dans la liste des modes sélectionnés.

9. Appareil (100) selon la revendication 8, dans lequel l'unité de traitement (101) est en outre configurée pour compléter la liste des modes sélectionnés en répétant l'étape (ii) avec la seconde catégorie de mode de prédiction angulaire intra la mieux classée.

10. Appareil (100) selon la revendication 8 ou 9, dans lequel l'unité de traitement (101) est configurée pour définir la pluralité de catégories de modes de prédiction intra angulaire sur la base du mode de prédiction intra angulaire respectif identifié par l'indice de mode de prédiction intra 2, 18, 34, 50 ou 66.

11. Appareil (100) selon l'une quelconque des revendications précédentes, dans lequel chaque mode de prédiction intra est identifié par un indice de mode de prédiction intra et dans lequel l'unité de traitement (101) est en outre configurée pour compléter la liste des modes sélectionnés en incluant un ou plusieurs modes de prédiction intra angulaire dans la liste des modes sélectionnés, dont l'indice de mode de prédiction intra respectif a un décalage de +1, -1, +2, -2, +3 ou -3 par rapport à un indice de mode de prédiction intra d'un mode de prédiction intra angulaire déjà inclus dans la liste des modes sélectionnés.

12. Appareil (100) selon l'une quelconque des revendications précédentes, dans lequel la pluralité de modes de prédiction intra comprend la pluralité de modes de prédiction intra définis dans la norme HEVC/H.265 ou une norme dérivée de celle-ci.

13. Appareil (100) selon l'une quelconque des revendications précédentes, dans lequel l'unité de traitement (101) est en outre configurée pour prédire des valeurs d'échantillon du bloc d'image courant (103) en utilisant le mode de prédiction intra adopté et pour fournir un bloc d'image prédit (105).

14. Appareil de codage (401) pour coder un bloc d'image courant (103) d'une image, le bloc d'image courant (103) comprenant une pluralité d'échantillons, chaque échantillon étant associé à une valeur d'échantillon, l'appareil de codage (401) comprenant :
un appareil (100) selon la revendication 13 pour fournir un bloc d'image prédit (105) ; et
une unité de codage (403) configurée pour coder le bloc d'image courant (103) sur la base du bloc d'image prédit (105) et du mode de prédiction intra adopté.

15. Appareil de décodage (411) pour décoder un bloc d'image codé d'une image, le bloc d'image codé comprenant une pluralité d'échantillons, chaque échantillon étant associé à une valeur d'échantillon, l'appareil de décodage (411) comprenant :
un appareil (100) selon la revendication 13 pour fournir un bloc d'image prédit (105) ; et
une unité de restauration (413) configurée pour restaurer un bloc d'image sur la base d'un mode de prédiction intra adopté codé, d'un bloc d'image codé et du bloc d'image prédit (105).

16. Procédé (500) de détermination d'un mode de prédiction intra adopté sur la base d'une liste des modes les plus probables, d'une liste de modes sélectionnés et d'une liste de modes non sélectionnés, dans lequel le mode de prédiction intra adopté est l'un parmi une pluralité de modes de prédiction intra adoptés comprenant une pluralité de modes de prédiction intra angulaire pour une prédiction intra des valeurs d'échantillon d'un bloc d'image courant (103), dans lequel le procédé (500) comprend :
la génération (501a) d'au moins une partie de la liste des modes les plus probables des modes de prédiction intra en incluant des modes de prédiction intra adoptés pour les blocs d'image voisins (107) du bloc d'image courant (103) dans la liste des modes les plus probables ; et
la génération (501b) d'au moins une partie de la liste des modes sélectionnés de modes de prédiction intra en incluant des modes de prédiction intra adoptés pour des blocs d'image voisins (109) des blocs d'image voisins (107) du bloc d'image courant (103) dans la liste de modes sélectionnés, dans lequel les blocs d'image voisins (109) des blocs d'image voisins (107) du bloc d'image courant (103) ne sont pas des blocs voisins (107) directs du bloc d'image courant (103).

17. Produit de programme informatique comprenant un code de programme pour réaliser le procédé (500) selon la revendication 16 lorsqu'il est exécuté sur un ordinateur ou sur un processeur.
